# EUROPEAN PATENT APPLICATION

(11) **EP 3 731 193 A1**
(43) Date of publication of application: **28.10.2020**
(21) Application number: 19170987.2
(22) Date of filing: 25.04.2019
(51) Int. Cl.: G07C 9/00, H04L 29/08

(54) **OCCUPANCY DETECTION SYSTEM AND METHOD**

(71) Applicant: alstria office REIT-AG, 20095 Hamburg (DE)
(72) Inventor: ELAMINE, Olivier, 22529 Hamburg (DE)
(74) Representative: Kramer Barske Schmidtchen Patentanwälte PartG mbB

(57) **Abstract**

An occupancy detection system allows for an automatic and reliable determination of a number of users in a space (11), for example, a shared office space. In particular, a data processing device (14) is in communication with an electronic lock provided at an entrance to the space (11), and at least one sensor (15) provided at the entrance. The at least one sensor is configured to detect a user entering or exiting through the entrance or a door of the entrance (13) being opened or closed. The electronic lock (21) is configured to selectively lock and unlock the entrance to the space. An unlocking of the electronic lock (21) and a detection by the sensor (15) are communicated to the data processing device (14), and on the basis of said communications the data processing device determines whether a number of users in the space has increased or decreased.

## Description

### Technical Field

The present invention generally relates to an occupancy detection system and a corresponding method, in particular, to an occupancy detection system and method that allow for a reliable and convenient detection of a number of users in a space to which access is provided.

### Background

There are a number of existing technologies for providing access and services to building occupants, for example, workers in an office building. Due to the considerable costs associated with leasing office space, many small or medium size companies, as well as individuals, sometimes use a shared office space provided in a building owned by a corresponding service provider. This allows for avoiding or limiting inefficiencies associated with leasing office space, as such an office space generally includes facilities such as meeting rooms, a kitchen, recreation rooms, and the like, which are rarely used. Further, in today's global economy, it is common for many employees or businessmen to travel both at home and abroad. Therefore, it is advantageous if the person that is travelling has access to office space also during such travels.

When providing such shared office spaces, several design constraints exist. First of all, the user experience must be as seamless as possible and adapted to any type of user. Further, security and access control are a key factor in an environment with no permanent presence of users. In addition, sometimes it may be cost-effective to design the system such that there is no staff on site at the respective office spaces. Nevertheless, the office space should feel welcoming and comfortable.

In order to be financially profitable, the system must provide solutions for controlling usage of space and services. For example, there should be a way for a user to obtain information with respect to an occupancy of a given space, in order to determine which of a plurality spaces is available and/or most convenient for the user.

Therefore, it is desirable to provide a system and method that allow for a flexible and easy detection of an occupancy of a space, for example, a shared office space, but not limited to the same.

### Summary of the Invention

In a first aspect, an occupancy detection system for determining a number of users in a space comprises an electronic lock provided outside of the space and configured to selectively lock and unlock an entrance to the space, at least one sensor provided at the entrance and configured to detect a user entering or exiting through the entrance and/or a door associated with the entrance being opened or closed, and a data processing device in communication with the electronic lock and the at least one sensor. The data processing device is configured to determine a number of users in the space based on a communication from the electronic lock indicating that the user has unlocked the entrance (or lack thereof) and a communication from the at least one sensor indicating that the user has entered or exited through the entrance and/or the door associated with the entrance has been opened or closed.

In a second aspect, a method of determining a number of users in a space, the space having an entrance and an electronic lock provided outside of the space and configured to selectively lock and unlock the entrance, comprises the steps of detecting unlocking of the entrance by the electronic lock, detecting a user entering or exiting the space through the entrance and/or a door associated with the entrance being opened or closed, and determining the number of users in the space by: increasing the number of users by one when the unlocking of the entrance and the user entering or exiting the space through the entrance and/or a door associated with the entrance being opened or closed are detected within a first predetermined period of time; and decreasing the number of users by one when the user entering or exiting the space through the entrance and/or a door associated with the entrance being opened or closed is detected and the unlocking of the entrance has not been detected within the first predetermined period of time prior to the detection of the user entering or exiting the space through the entrance.

With the system and method disclosed herein, a process for providing access and services to building occupants, for example, workers at office spaces is provided. This process could also be used in other areas of real estate, for example, residential buildings or hotels. With the disclosed system and method, it is possible to centralize information concerning an occupancy of a space, for example, a shared office space, and to allow the user to access this centralized information. Based on the information, the user can then decide which space to visit, or whether a desired space is available or fully occupied.

In this respect, the present invention is based at least in part on the realization that it is desirable to provide an automatic and perhaps also centralized system that allows for a determination of a number of users in a given space. In particular, it has been realized that it is desirable to provide a system that can determine a number of users without using a surveillance system having one or more cameras, and personnel for keeping track of the number of users on the basis of the images captured by such a surveillance system.

Further, the present invention is based at least in part on the realization that it may be desirable to provide an access system with a two-way door as an entrance to the space, without having to provide a separate entrance and a separate exit through which only entry to or exiting of the space is possible. In other words, it has been realized that it would be advantageous to have an automatic system that is capable of distinguishing whether a user enters or exits through a particular two-way door of the access system. According to the present invention, this is achieved by combining a detection that a user has actuated an electronic lock associated with a door (or a lack of such a detection) with a detection that a user has passed through the door and/or the door has been opened or closed. In this manner, based on a combination of the at least one detection result, it can be determined whether a user has entered through the door or exited through the same. In particular, the number of users in the space can be increased by one when the detection by the electronic lock and the detection by a sensor associated with the door are received within a first predetermined period of time. Likewise, the number of users can be decreased by one when the detection by the sensor is made, but no detection by the electronic lock has been made within the first predetermined period of time prior to the detection by the sensor.

In addition, the present invention is based at least in part on the realization that there is the possibility that one or more other users enter or exit through the entrance when the electronic lock is actuated. It has been realized that it is possible to improve the accuracy of the determination of the number of users by using further information obtained from, for example, a user registration device provided in the space. In particular, a Wi-Fi access device can be configured to register a user device with a Wi-Fi network of the space when a user enters the same. In this manner, for example, one or more other users entering through the entrance at the same time as the user that unlocks the electronic lock may be detected by the system. Likewise, if one or more users enter through the entrance while another user exits through the same, this may also be detected in this manner.

Other features and aspects of this disclosure will be apparent from the following description and the accompanying drawings.

### Brief Description of the Drawings

In the following, embodiments of the present invention are described in detail with reference to the attached drawings, in which:
FIG. 1 shows an exemplary floor plan of a shared office space in accordance with an embodiment of the present invention;
FIG. 2 shows a schematic overview of an occupancy detection system in accordance with an embodiment of the present invention;
FIG. 3 shows an exemplary process for counting a number of users in a space performed by the occupancy detection system.

### Detailed Description

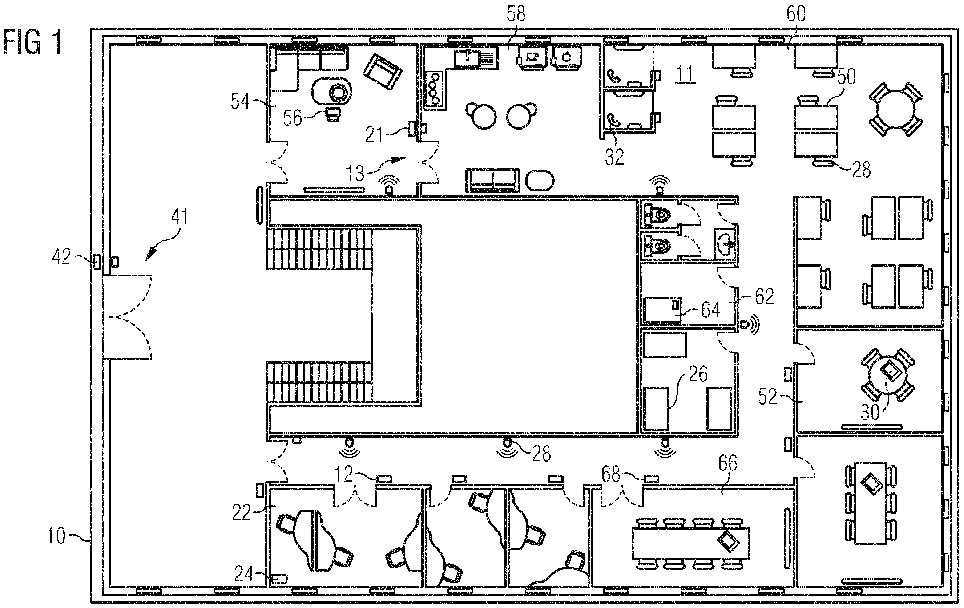

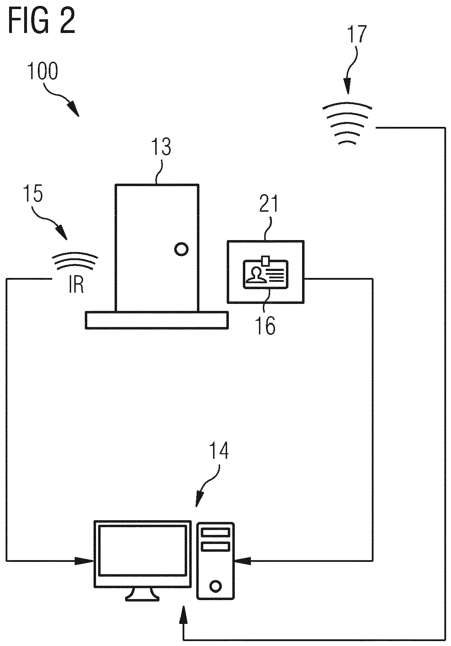

In the following, an exemplary embodiment of an occupancy detection system in accordance with the present invention will be described with respect to FIGS. 1 and 2. In the exemplary embodiment, the occupancy detection system is provided at each of a plurality of shared office spaces, in order to determine the number of users in each office space, for example, in an area of the shared office space having an entrance that is secured by an electronic lock, which may be unlocked by users having booked access to the shared office spaces. However, it will be readily appreciated by the skilled person that many other possible applications of the occupancy detection system disclosed herein are possible. For example, the occupancy detection system can be used for a single building, for example, a shared office space, or one or more recreational facilities such gyms, one or more airport lounges, etc.

FIG. 1 shows a floor plan of a shared office space provided in a building 10 as an example of one of a plurality of distributed facilities that can be used with the system and method disclosed herein. It will be appreciated that, in the present example, a plurality of buildings 10 may be provided at different locations distributed around a city, or even in different countries. Further, the term "facilities" as used herein is not intended to only designate different buildings, but may also designate different spaces, for example, floors, apartments or rooms within a building, or other spaces or equipment within an office space that may be accessed using a single access device, preferably at a plurality of different locations (herein referred to as "distributed facilities").

As shown in FIG. 1, building 10 includes a main entrance 41. Main entrance 41 may comprise one or more doors configured to be opened by using an access device to unlock an electronic or smart lock 42, which will be described in more detail below, or by inputting a code via electronic lock 42, which may also function as a code input device. In some embodiments, a separate code input device may be provided.

As shown in FIG. 1, the shared office space includes a lobby or waiting room 54, a kitchen or recreational area 58, an open office space 60 including a plurality of workplaces ("open desks") 50, meeting rooms 52, 66, and one or more private offices 22. In addition, the shared office space may include one or more flexible meeting rooms 32 being provided with, for example, a telephone or another communication device. A printer room 62 may include a printer 64 and any other office equipment such as a fax machine and the like, which may be used by the user having the appropriate access rights. Further, a separate room may include technical equipment such as, for example, a wireless or wired communication device 26, for example, a router providing access to the internet. Throughout the office space, a plurality of wireless or wired access points 28 in communication with communication device 26 may be provided.

Waiting room 54 may be openly accessible to any person having entered through main entrance 41. In some embodiments, however, an electronic lock (not shown) that may be opened, for example, by inputting an access code or using an access device may be provided in front of waiting room 54. Inside waiting room 54, a reception terminal 56, for example, a tablet, may be provided. Reception terminal 56 may be configured to be used by a user to, for example, check the availability of one of meeting rooms 52, 66, book one of the meeting rooms 52, 66, reserve private office 22, reserve a seat at one of workplaces 50, and the like.

Waiting room 54 may also include an entrance 13 for access to the main area of the shared office space, i.e., open office space 60, the various meeting rooms 52, 66 and the other facilities provided in the shared office space. The main area of the shared office space is one example for a space 11 to which a user gains access and for which a number of users in the space is determined with the systems and methods disclosed herein. Entrance 13 is secured by an electronic (door) lock 21. Access via entrance 13, and the determination of the number of users in space 11 will be described in more detail below.

Each meeting room or private office may be secured by a further electronic lock, for example, a lock 12 in front of private office 22 and a lock 68 in front of meeting room 66. Each meeting room or private office may include a printer 24, a computer 30, a TV, a conference phone, and the like.

Electronic locks 12, 21, 68 and, optionally, lock 42 may form a system of connected locks that are in communication with a central data processing device 14 (for example, a server or the like) shown in FIG. 2. FIG. 2 shows an overview of the general architecture of the occupancy detection system of the present disclosure. As shown in FIG. 2, an occupancy detection system 100 in accordance with the present disclosure includes data processing device 14, which is in communication with the plurality of electronic locks provided at a plurality of distributed facilities, for example, a plurality of buildings 10, each including the above-described shared office space.

As shown in FIG. 2, an occupancy detection system 100 for determining a number of users in space 11 comprises electronic lock 21 provided outside of space 11, for example, at entrance 13, and configured to selectively lock and unlock entrance 13, i.e., electronic lock 21. As will be described in more detail below, electronic lock 21 is configured to be unlocked by an access device 16 of a user having access to the plurality of shared office spaces. For example, electronic lock 21 may be unlocked in response to access device 16 of the user, for example, a mobile phone, wireless communicating credential information, for example, a unique ID associated with the user, to electronic lock 21.

Access control system 100 further comprises at least one sensor 15 provided at entrance 13 and configured to detect a user entering or exiting through entrance 13 and/or a door associated with entrance 13 being opened or closed. In particular, entrance 13 may be configured as a single door through which a user can enter or exit space 11. It will be appreciated that access control system 100 may also include a plurality of entrances, each entrance 13 being monitored by central data processing device 14 in the manner described herein. Accordingly, the number of users in space 11 can be counted by data processing device 14 on the basis of the signals received from the electronic locks and sensors provided at each entrance. Sensor 15 may have any appropriate configuration that allows detection of a user passing through entrance 13, for example, an infrared detection device, a movement detection device, a light barrier, a proximity sensor, a heat sensor or a pressure sensor provided in a floor in a section of entrance 13 and actuated when a weight exceeding a predetermined threshold is detected. In addition or as an alternative, sensor 15 may be configured as a sensor that detects opening or closing of the door of entrance 13, for example, a mechanical switch, a touch sensor, etc. It will be readily apparent to the skilled person that any appropriate sensor that allows passing of a person through entrance 13 to be detected can be used in accordance with the present invention. Further, in case a plurality of sensors 15 is provided, data processing device 14 may be configured to determine that a user has entered or exited through entrance 13 only when a detection result from all or at least two or more of sensors 15 are received.

As shown in FIG. 2, data processing device 14 is in communication with electronic lock 21 and sensor 15. In this respect, data processing device 14 may be a data processing device that is provided on site at each of the buildings 10, or may be a central data processing device that is provided at a central location and in communication with the electronic locks and sensors at each of the plurality of buildings 10. Data processing device 14 is configured as any appropriate computer system having data communication interfaces, a processor, a memory, etc. In particular, data processing device 14 may be configured as a server, or may be connected to such a server, and may be configured to provide information to a user upon request. For example, a user may access a webpage, which may display a number of users at a given office space. In other embodiments, a user may send a request to the data processing device 14 or the associated server, and the data processing device 14 or the associated server may send a response to the user including information indicating the number of users at a selected space, or at all available spaces in the system. Data processing device 14 is configured to determine a number of users in space 11 based on a communication (signal or transmission) from electronic lock 21 indicating that the user has unlocked the same (i.e., whether a corresponding communication is received or not), and a communication (transmission or signal) from the associated sensor 15 indicating that a user has entered or exited through entrance 13.

In particular, data processing device 14 is configured to determine the number of users in space 11 by increasing the number of users by one when the communication from electronic lock 21 and the communication from sensor 15 are received within a first predetermined period of time. The first predetermined period of time is a period of time that typically passes between a user unlocking electronic lock 21 via access device 16 and the user opening the door at entrance 13 and passing through the same. For example, the first predetermined time may be between one and twenty seconds. In some embodiments, data processing device 14 may be configured to adjust the first predetermined period of time based on appropriate machine learning (Artificial Intelligence) algorithms and the like. For example, data processing device 14 may continually measure a time difference between two detections, determine an average, for example, a running average, and set the first predetermined period of time as an interval around the average value. In some embodiments, the interval may be gradually reduced with the number of detections and/or the up time of the system, as a larger number of measurements will be obtained. If the two detections are communicated to data processing device 14 within the first predetermined period of time, it is assumed that a user has unlocked electronic lock 21 and entered through entrance 13. Accordingly, the number of users inside space 11, i.e., in the shared office space, is increased by one. In this respect, it will readily appreciated that the total number of users will be reset to zero at an appropriate time. For example, in case the office space has certain opening hours, resetting of the number of users may take place after the closing and/or prior to the opening of the office space. In case the space is opened for 24 hours, the number of users may be set to zero at the opening of the space, and may be reset or adjusted as appropriate at certain intervals, for example, by manually counting the number of users at a given space at a predetermined times or intervals. The reset is performed in order to correct for a potential double counting of a user entering or exiting the space, for example, when one or more users enter the space together and the like. In some cases, the number of users may also be set to zero at a given time, for example, in the early morning (for example, at 4 am), where almost no users are present in the space.

Likewise, the number of users may be decreased by one when the communication from sensor 15 is received and the communication from electronic lock 21 has not been received within the first predetermined period of time prior to receiving the communication from sensor 15. In other words, when sensor 15 detects that a user has passed through entrance 13, but no detection has been made that electronic lock 21 is unlocked within the first predetermined period of time prior to the detection by sensor 15, it can be assumed that a user has passed through entrance 13 from the inside to the outside, i.e., has left space 11. Accordingly, the number of users is decreased by one.

It will be appreciated that there may be circumstances in which the above-described detection of the number of users is not always accurate. For example, there may be a case where a user unlocks electronic lock 21 and enters through entrance 13, and one or more other users follow the user unlocking electronic lock 21 without also unlocking the same. In this case, it could be erroneously detected that the following users exit space 11, while in reality they also enter the same. Therefore, in order to improve the determination of the number of users, occupancy detection system 100 may further comprise a user registration device 17 provided in space 11. User registration device 17 is in communication with data processing device 14 and configured to register the user in space 11 in response to a registration request from the user. For example, user registration device 17 may be a Wi-Fi access device configured to register a user device with a Wi-Fi network of space 11. For example, the user device may be access device 16, for example, a mobile phone of the user. In some embodiments, the user may be automatically registered by user registration device 17 after entering space 11. For example, a user's mobile phone may be automatically registered by a Wi-Fi access device. In the same manner, when a user leaves space 11, the user device will no longer be detected, i.e., user registration device 17 determines that the user is no longer registered in the space.

In particular, data processing device 14 may be configured to increase the number of users in space 11 by one instead of decreasing the same when a communication indicating that a user has been registered in the space is received from user registration device 17 within a second predetermined period of time after receiving the communication from the at least one sensor 15, even if the communication from electronic lock 21 has not been received within the first predetermined period of time prior to receiving the communication from sensor 15. In other words, when a user unlocks electronic lock 21 and enters through entrance 13, data processing device 14 increases the number of users by one. If a second user now also enters through entrance 13 without unlocking electronic lock 21, data processing device 14 only receives the communication from sensor 15. Accordingly, data processing device 14 would normally consider the user as exiting space 11. However, if a communication from user registration device 17 is received within a second predetermined period of time after receiving the further communication from sensor 15, it can be assumed with a certain probability that the second user has not left space 11, but has also entered the same through entrance 13. Here, the second predetermined period of time may be between 20 and 60 seconds. In addition, data processing device 14 may adjust the total count of users in space 11 by comparing the current count of users with a registered number of users registered with user registration device 13, for example, at regular intervals or at predetermined times (e.g., daily, hourly, etc.). Alternatively or in addition, an operator or administrator may input an actual number of users in space 11, which is obtained, for example, by manually counting the number of users or the like, into data processing device 14.

Of course, it will be appreciated that it is likely that the user unlocking electronic lock 21 and entering space 11 will also register with user registration device 17. Therefore, data processing device 14 may be configured to not take into account a first communication from user registration device 17 after a user has unlocked electronic lock 21 in the determination whether a further user has also entered space 11. In particular, data processing device 14 may be configured to, when the communication from electronic lock 21 and the communication from sensor 15 are received within the first predetermined period of time, and more than one communication indicating that a user has been registered in space 11 is received from user registration device 17 within a third predetermined period of time after receiving the communication from electronic lock 21, increase the number of users by the number of additional communications from user registration device 17 instead of decreasing the same. In this manner, any users following the first user unlocking electronic lock 21 and registering in the space 11 can be more accurately recognized, and the total number of users can be increased instead of being decreased. The third predetermined period of time may also be between 20 and 60 seconds.

Another case where a determination by data processing device 14 may not be accurate is when a user in space 11 leaves the same through entrance 13, by opening the associated door, and one or more users enter space 11 through the door simultaneously or shortly thereafter. In this case, no unlocking of electronic lock 21 is detected, and data processing device 14 would normally consider each detection by sensor 15 as corresponding to a user leaving space 11. However, in reality, one or more users may enter space 11 in this case. In this case, data processing device 14 is also configured to increase the number of users in the space 11 by one instead of decreasing the same when a communication indicating that the user has been registered in the space is received from user registration device 17 within the second predetermined period of time after receiving a communication from sensor 15, even if the communication from electronic lock 21 has not been received within the first predetermined period of time prior to receiving the communication from the at least one sensor 15.

To assist in estimating the occupancy of space 11, data may also be gathered using an additional user detection device 28, for example, chair presence detectors (see Fig. 1), and the like. Data processing device 14 may further be configured to request information on the detection by the user detection device 28 at regular intervals, for example, every five minutes. The information gathered in this manner may be used to correct and/or improve the determination of the number of users in space 11, for example, by allowing a distinction between different parts of space 11, such as occupancy of shared office space 60 or the like. This may further assist the user in selecting available facilities and/or available workspaces, meeting rooms or private offices.

The counting can be further refined by using automatic learning techniques, which would allow the system to adjust its counting based on, for example, manually counted user numbers, the usage of registration device 17, etc. In particular, an error factor could be determined, and the number of users could be set to an upper or lower limit value based on the error factor.

In the following, access device 16 is described in more detail. Access and security play an important role in the centralized access system of the present disclosure. To offer a seamless experience to all members, regardless of their level of technological adoption, access passes in the form of an access device are used as the main access control method in accordance with the present disclosure. Said access passes may use wireless technology to communicate with, e.g., contactless readers (the above-mentioned electronic or connected locks, tablets, smartphones, vending machines, etc.). The access passes can take various forms. For example, access device 16 may be an access card, a sticker, a key chain, and the like. In particular, access device 16 may be a conventional smart card having a standard form, which is relatively cheap and easy to personalize and store.

Access passes are only available for members and visitors, as will be described in more detail below. In the system of the present disclosure, the access passes may be used to unlock main entrance 41 of building 10, unlock entrance 21 to the main area of the office space, unlock and lock meeting rooms, for example, meeting rooms 66, 52, unlock and lock private offices such as private office 22, and use additional services, for example, coffee machines, vending machines, and the like. A unique access pass (ID) is assigned for each member and synchronized with the member's account. The access pass is stored on access device 16. If a member loses access device 16, a new access device can be configured, for example, in any one of waiting rooms 54. To do so, the user must log in via terminal 56 with his login/password, follow a "I lost my access card" process during which the old access card is disabled and can no longer be used, pick up a new access card, which may be stocked inside waiting room 54, bring the new access card into contact with a contactless reader provided, for example, in or at terminal 56 to synchronize the same with the user account, and use the newly configured access card to unlock entrance 20. Access information is stored in central database 18 and not in a local database for security reasons.

As mentioned above, the access pass can take various forms, for example, stickers, cards, and the like. Further, for example, with near field communication (NFC), an NFC-enabled mobile phone can be used by a member as an access device. Contactless access control has the advantage that is does not require a complex hardware installation and is very user-friendly. For instance, with NFC, a member can autonomously program a new access device by using terminal 56 having contactless features. Further, a contactless access control can be set up in a large or small space, and also in a plurality of locations (for example, it is easy to enable/disable access across sites). In addition, access cards are cost-effective, and hardware costs are minimal as the data management is performed on a central server. Therefore, no complex IT infrastructure and maintenance teams are needed.

In order to control access, door locks play an important role. These door locks only allow access for members, registered visitors and guests. Generally, there can be four types of doors inside the system that require access control. Each door can be unlocked using a valid access pass.

Main entrance 41 can be entered using an access device or an access code. As previously described, electronic lock 42 may perform both of these functions.

Inside waiting room 54, entrance 20 controls access to the main area of the office space. From the outside, this door can only be opened with a valid access pass (access device). Guests are not allowed to enter via entrance 20 without being accompanied by their host.

Meeting room doors can only be locked and unlocked using the access pass of the member who booked it. For example, lock 68 can only be unlocked during the booking period by the user having booked the same. To check out from a meeting room, users must lock the door to the meeting room from the outside.

Private office doors can only be locked and unlocked using the access pass of the member or members who booked it. It can only be unlocked during the booking period, and checkout must be performed by locking the door.

Preferably, the above-mentioned locks are electronic locks that can be unlocked using a contactless access device. It should be noted that electronic locks typically work on a battery. Therefore, power shortage must be identified, and batteries need to be replaced periodically. For example, battery control devices may be provided for each lock and generate an alarm that is sent to data processing device 14 to alert an administrator that the battery needs to be replaced. Further, for a seamless experience and security reasons, the above-described access control system must be fully integrated with other systems such as access pass creation, the booking system, security systems, invoicing, etc. In addition, in case a separate building door access control exists for building 10, it must also be integrated into the same.

The plurality of connected locks of the present disclosure allow for a precise access control for each room, giving different rights for different users at different times. Therefore, with no reception and no staff inside the facilities, the strict but flexible access control using access device 16 and, for example, electronic locks 12, 21, 68 is key to managing spaces and making sure that services are provided to the right users at the right time. In addition, to allow for billing for the provided services, for example, with hourly rates, it is necessary to detect when people check in and check out from each facility and the respective rooms provided therein. Using the plurality of connected locks, the exact moment when a user enters an office space, enters and leaves a meeting room or a private office, and the like, can be registered by access system 100. Further, Wi-Fi access logs can be combined with these data, and it can be estimated who is in a space, as well as the total occupancy of each space. This information can again be displayed to other users intending to book a space or reserve a room.

In some embodiments, a mobile application (app) can be used to ensure a high level of services while providing mobility, as well as for controlling the overall experience inside the respective facilities. The mobile application offers different services when logged in and logged out. For example, when logged out, users can use the application to consult a location and an availability of the distributed facilities, for example, the office spaces and their associated open desks, meeting rooms, private offices, and the like. Further, the application can be used for sign up and log in, as well as for getting general information on the services provided by centralized access system 100, such as a user guide, contact information, prices. When logged in, members can use the application to consult/modify their account information, book a desk, a meeting room or a private office, as well as extend/cancel a booking, consult invoices, access additional services such as a taxi service, food delivery, etc., lock/unlock connected doors in case the associated portable device is NFC-enabled, report issues (loss of access device 16, security issues, etc.), and log out. The application is also used to push notifications to users. For example, for a meeting room, a booking start, a booking info, a booking end, a booking update, and the like can be notified. The same applies to private offices. Further, as previously mentioned, arrival of guests can be notified, booking start and booking end for an open desk can be notified, arrival of a delivery can be notified, and the like.

To compensate for the absence of permanent staff at each facility, it may be advisable to set up a helpline in form of an interactive voice server. This communication channel may provide a solution for users without internet access and a direct link with facility managers for issues and urgent matters. The voice server provides access for users to sign up for the service, manage their account, manage their booking, get an access code for members who forgot their access device, report an issue, and the like. Voice response can be configured in different languages to meet users' preferences. Further, with an interactive voice server, no phone calls are lost, and statistics about most frequent questions and issues can be collected.

The website accessed by the user is the first contact point for all types of users. It provides general information about the service, as well as complete control over member accounts. When used outside access system 100, users can use the website to consult the location and availability of office spaces, sign up and log in, and get general information about the offered services. Once they are logged in, members can use the platform to consult/modify their account information, book a desk, meeting room or private office, and the like, consult invoices, access other services, report issues, and the like.

From within access system 100, users are automatically redirected to a login page where they can log in (members: login/password, guests: access code sent by their contact), sign up, consult availability, get general information, and the like. Once they are logged in, members can use the platform to consult/modify their account information, book a desk and the like, consult invoices, access all services offered by system 100, i.e., printers, taxi services, any other type of office equipment, etc., report issues, log out, access a collaborative platform that may be provided to chat and share files with other members and guests, and access the internet. Guests and visitors can use the platform to access the available services at the facility, report issues, log out, access the collaborative platform, access the internet and subscribe to a membership. In some embodiments, when a meeting room or a private desk is booked, a private and secure online space is automatically created, allowing participants to share files and chat easily. The creator of the private and secure online space can give temporary access to the created spaces to other members. In other embodiments, system 100 may be configured to store user profiles in database 18 that may, for example, be used to appropriately configure any computers, printers and other equipment in the respective office spaces in an automatic manner when they are used by a particular user.

Inside the web platform, a special interface must be provided for an administrator of system 100. This interface will provide features allowing for the management of member accounts and corporate accounts, consulting analytics, and collecting cumulated invoices. Preferably, the web platform is web based and accessible on any operating system and hardware. Further, being hosted on a central server, the web platform does not require any complex IT infrastructure and is easy to scale if the number of members or facilities grows. Finally, the web platform provides a solution for controlling access to the available services such as printers and the like.

As previously mentioned, there are several possibilities for locks management solution 77. For example, smart locks may be used that are Wi-Fi connected locks targeting mainly the home automation market. Alternatively, a conventional hotel card lock system may be used that provides an access control solution for hotels, storing access rights inside an access card. Further, real time access control systems can be used, which use wireless updates from a central server. Preferably, a real time access control system is used that is resilient to power shortage, network shortage, and can be updated in real time. Further, the system should be easy to install or remove and compatible with standard door locks. The respective locks may be opened by an access pass, a key, or a smartphone, for example, using NFC. Preferably, each lock should be connected to the central data processing device 14, for example, the server running back web application 72, and allow for a web-based configuration and management. In particular, the system should allow for a precise configuration inside a building, i.e., assigning different rights for different rooms for different access passes at different times. Finally, the system should allow for the management of connected locks in different buildings within one system. As previously mentioned, an exemplary system that may be used is the BRIVO system.

Concerning access pass solutions, several different technologies may be used. One may be a common contactless RFID smartcard that is compatible with most systems. However, such an RFID smartcard requires a specific reader/writer for configuration. In some embodiments, a secure version of an RFID smartcard can be used. In other embodiments, an NFC communication system may be used, which has the advantage that it may be configured via, for example, smart devices such as a tablet. In some smartphones, NFC communication means are already included. Preferably, an NFC system may be used to ensure future compatibility with smartphones and other connected objects.

Concerning contact point solutions, e.g., wireless access point solutions, any secure platform that enables captive portal support with a simple web-based user interface, assigning different rights and roles for different users, automatically disconnecting at the end of the scheduled time, and compatibility with all platforms can be used. Two types of solutions, which may be used, are traditional enterprise class networks and cloud based wireless access solutions. Preferably, cloud based wireless access solutions are used, as they generally fulfil the above-listed requirements. This system architecture may be composed of a router Wi-Fi fiber modem connected to the internet, a Wi-Fi access point with a POE injector, and cloud based network management software.

For the above-mentioned presence sensors, a system that is composed of, for example, activity sensors deployed under desks or seats, network receivers use to collect data via wireless or wired transfer via the internet, and a cloud based management software could be used.

In the exemplary embodiment described above, space 11 is one of a plurality of shared office spaces provided at different locations, each shared office space comprising a plurality of public and/or private work spaces and an entrance 13 associated with an electronic lock 21 and at least one sensor 15. Further, data processing device 14 is a central data processing device in communication with each of the electronic locks 21 and sensors 15 and configured to determine the number of users in each of the shared office spaces. However, as previously mentioned, data processing device 14 may also be provided at a single site, for example, a single shared office space, and may be configured to determine the number of users in the single space 11.

Likewise, as also mentioned, the present invention is not limited to shared office spaces, but can also be applied to other spaces such as airport lounges, recreational facilities, hotels, residential buildings, or the like. Further, although it has been described that space 11 comprises the entirety or substantially the entirety of, for example, the shared office space, it will be appreciated that in other embodiments space 11 corresponds to a portion or section of a larger space, for example, to open office space 60 of a shared office space, a floor or room inside a building, etc.

### Industrial Applicability

In the following, an operation of occupancy detection system 100 in accordance with the exemplary embodiment will be described in more detail.

In the exemplary system, a user generally has a particular user status associated with the user. For example, the user may have member status. After registering as a member, the user will generally get access to one or more of the plurality of the distributed facilities, for example, one or more of buildings 10 including the shared office spaces. In other words, the member can enter any building 10 and the associated workspace therein using access device 16. Once a user has subscribed, data processing device 14 updates database 18 accordingly, and controls locks 21 at each of the facilities to which the user has subscribed to allow access by access device 16 during the times covered by the membership. The same applies to lock 42 provided at main entrance 41 of each building 10. Depending on the details of this subscription, the user may also have access to, for example, meeting room 52, private office 22 via lock 12, or meeting room 66 via lock 68. Further, the user may also book a specific open desk 50 in open office space 60. In addition, the subscription may allow the user to access the Wi-Fi network provided at each facility, as well as any other services covered by the subscription, for example, printers or the like. Of course, billing for services such as printing and the like may be based on the actual usage of said services, which may be tracked due to the unique ID of access device 16 that is used for accessing the same.

When a user unlocks, for example, electronic lock 21 at the entrance 13 to the space 11 of one of buildings 10, and subsequently enters through entrance 13, the unlocking of entrance 13 by electronic lock 21 and the user entering the space 11 through entrance 13 are detected. When the two detections occur within the first predetermined period of time, it is determined that the number of users inside space 11 has increased by one.

On the other hand, in case it is detected that a user has entered or exited the space through entrance 13, based on a detection by the sensor 15, and no unlocking of entrance 13 has been detected within the first predetermined period of time prior to the detection of the user entering or exiting space 11 through entrance 13, the number of users is decreased by one. Accordingly, it is possible to keep track of the number of users inside space 11.

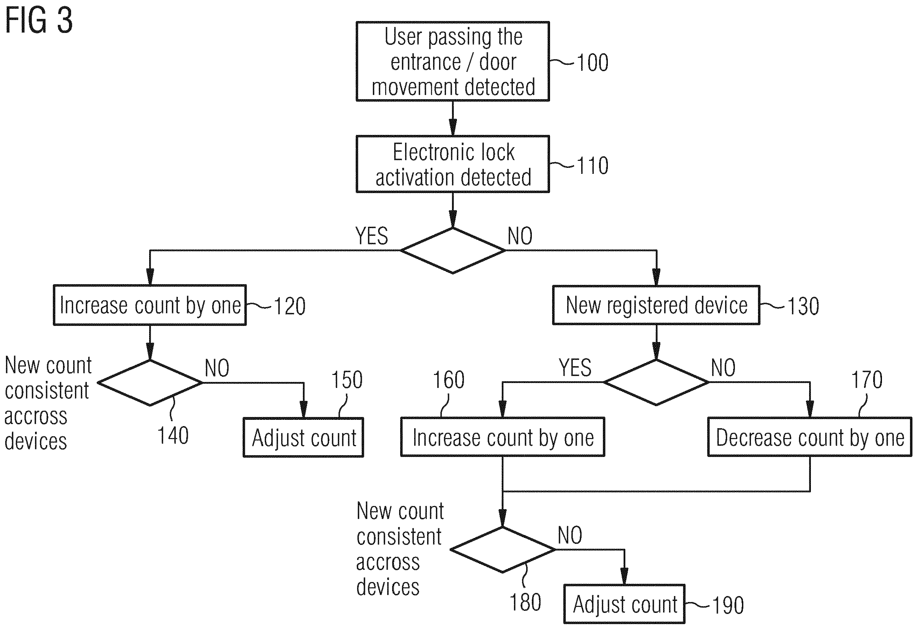

An exemplary process for determining the occupancy in space 11 will be described in further detail with reference to Fig. 3. As shown in Fig. 3, in a first step 100, it is detected that a user has passed the entrance and/or the associated door has been opened or closed. Next, in step 110, it is determined whether an activation of the electronic lock associated with the entrance has been detected. If such an electronic lock activation has been detected, the user count is increased by one in step 120. On the other hand, if no electronic lock activation has been detected, the process proceeds to step 130. Here, it will be appreciated that only new (additional) activations of the electronic lock will be taken into consideration when a detection result is received from sensor 15. In other words, while it may be possible that, for example, a user unlocks the electronic lock and enters space 11, and another user, almost at the same time, exits through entrance 13, the electronic lock activation will only be associated with the first user passing through the entrance. Therefore, even if the second user passes through the entrance within the first predetermined period of time, as there is no further electronic lock activation, it will be correctly recognized that the second user has exited from space 11.

In step 130, it is checked whether a new user device has been registered by user registration device 17. If this is the case, the user count will be increased by one in step 160, although no electronic lock activation has been detected. This allows for correctly recognizing users that enter the space 11 without unlocking the electronic lock, for example, when another user exits the space. On the other hand, in case no new user device has been detected, the user count is decreased by one in step 170. Therefore, it is recognized that the user has left space 11.

In order to further improve the detection accuracy, a check is performed in steps 140 and 180 to verify that the currently determined user count is consistent. To this end, the currently determined user count is compared with the number of user devices registered with user registration device 17. Therefore, for example, in case more user devices are registered with user registration device 17 than the number of users that has been currently determined as being present inside space 11, said number of users can be adjusted accordingly. Of course, the same also applies in case a substantially lower number of user devices are registered with user registration device 17. The checks in steps 140 and 180 may be performed at regular intervals, for example, every hour, or at predetermined times, for example, several times per day.

In case the checks in steps 140 and 180 show that there is an inconsistency between the number of counted users and the number of registered user devices, as mentioned above, the user count is adjusted in steps 150 and 190.

A member that has subscribed to one or more office spaces may use its computer to check the availability of a given office space on the website associated with central processing device 14. The user may also log in and book a seat in the open office space 60 of the desired facility, for example, for a few hours. When the user arrives in front of building 10, he or she uses access device 16 to unlock main entrance 41. In some embodiments, the member may also receive a welcome notification on its mobile phone, as well as information on how to find the booked desk. Further, the user will also unlock entrance 13 after passing through waiting room 54 via lock 21, using access device 16. Then, the user may proceed to open office space 60 and sit at any available desk or the specific desk that has been booked. Further, the user may connect to the wireless network and access all services available at the facility. At the same time, the increase in the total number of users in the space 11 can be detected in the above-described manner.

Although the preferred embodiments of this invention have been described herein, improvements and modifications may be incorporated without departing from the scope of the following claims.

For example, although the exemplary embodiment described herein relates to the use of shared office spaces, it will be readily apparent to the skilled person that the system and method disclosed herein can also be used for hotels, residential buildings, recreational facilities and the like. For example, the occupancy detection system 100 described herein may be provided for a plurality of gyms located in a city or in several cities, and a user may check the occupancy of the gyms in order to determine which one is preferred, for example, due to a currently low number of occupants.

In another embodiment, the disclosed system and method can also be used for airport lounges and the like. For example, as soon as a flight is booked, the system can configure the electronic locks associated with the respective lounges or lobbies such that the user having the corresponding access device may enter each lounge a predetermined time before its flight departs. Further, using the above-mentioned sensors, the occupancy of each lounge can be determined, and in case of several lounges at a given location, customers may be directed to specific lounges that are not fully occupied. Similarly, access to Wi-Fi, copy machines, electronic newspapers, or one or more tablets can be provided in each lounge offering the above-described additional services.

It should again be pointed out that the present disclosure can also be applied in case a space 11 is provided with a plurality of entrances 13. In this case, data processing device 14 receives all detection results from the associated sensors and performs the above-described process for each entrance. Of course, in case there is only a single user registration device 17, measures have to be taken to only consider each registration once when determining whether a user has entered or exited space 11, as will be readily appreciated by the skilled person.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An occupancy detection system (100) for determining a number of users in a space (11), comprising:
an electronic lock (12, 21, 42, 68) provided outside of the space (11) and configured to selectively lock and unlock an entrance (13) to the space;
at least one sensor (15) provided at the entrance (13) and configured to detect a user entering or exiting through the entrance and/or a door associated with the entrance (13) being opened or closed; and
a data processing device (14) in communication with the electronic lock (12, 21, 42, 68) and the at least one sensor (15),
wherein the data processing device (14) is configured to determine a number of users in the space (11) based on a communication from the electronic lock (12, 21, 42, 68) indicating that a user has unlocked the entrance (13) and a communication from the at least one sensor (15) indicating that a user has entered or exited through the entrance (13) and/or the door associated with the entrance (13) has been opened or closed.

2. The system of claim 1, wherein the data processing device (14) is configured to determine the number of users in the space (11) by:
- increasing the number of users by one when the communication from the electronic lock (12, 21, 42, 68) and the communication from the at least one sensor (15) are received within a first predetermined period of time; and
- decreasing the number of users by one when the communication from the at least one sensor (15) is received and the communication from the electronic lock (12, 21, 42, 68) has not been received within the first predetermined period of time prior to receiving the communication from the at least one sensor (15).

3. The system of claim 2, further comprising a user registration device (17) provided in the space (11), the user registration device (17) being in communication with the data processing device (14) and configured to register the user in the space (11) in response to a registration request from the user.

4. The system of claim 3, wherein the data processing device (14) is configured to increase the number of users in the space (11) by one instead of decreasing the same when a communication indicating that a user has been registered in the space (11) is received from the user registration device (17) within a second predetermined period of time after receiving the communication from the at least one sensor (15), even if the communication from the electronic lock (12, 21, 42, 68) has not been received within the first predetermined period of time prior to receiving the communication from the at least one sensor (15).

5. The system of claim 3 or 4, wherein the data processing device is configured to, when the communication from the electronic lock (12, 21, 42, 68) and the communication from the at least one sensor (15) are received within the first predetermined period of time, and more than one communication indicating that a user has been registered in the space (11) is received from the user registration device (17) within a third predetermined period of time after receiving the communication from the electronic lock (12, 21, 42, 68), increase the number of users by the number of additional communications from the user registration device (17) instead of decreasing the same.

6. The system of any one of claims 3 to 5, wherein the data processing device (14) is configured to adjust the number of users in the space (11) on the basis of a comparison with a number of registered users registered with the user registration device (17), for example, at regular intervals or predetermined times, and/or on the basis of a user input of a current number of users in the space (11).

7. The system of any one of claims 4 to 7, wherein the second predetermined time is between 20 and 60 seconds.

8. The system of any one of claims 3 to 7, wherein the user registration device (17) is a Wi-Fi access device configured to register a user device (16) with a Wi-Fi network of the space (11).

9. The system of any one of claims 3 to 8, wherein the user is automatically registered by the user registration device (17) after entering the space (11).

10. The system of any one of claims 1 to 9, wherein the electronic lock (12, 21, 42, 68) is configured to be unlocked in response to an access device (16) of the user, for example, a mobile phone, wirelessly communicating credential information, for example, a unique ID associated with the user, to the electronic lock (12, 21, 42, 68).

11. The system of any one of claims 1 to 10, wherein the at least one sensor includes at least one of an infrared detection device, a movement detection device, a light barrier, and a pressure sensor.

12. The system of any one of claims 1 to 11, wherein the data processing device (14) is configured to provide the number of users in the space (11) to the user in response to a request from the user.

13. The system of any one of claims 1 to 12, wherein the first predetermined time is between 1 and 20 seconds.

14. The system of any one of claims 1 to 13, wherein the space (11) is one of a plurality of shared office spaces provided at different locations, each shared office space comprising a plurality of public and/or private workspaces (22, 50, 52, 66) and an entrance (13) associated with an electronic lock (12, 21, 42, 68) and at least one sensor (15), and the data processing device (14) is a central data processing device in communication with each of the electronic locks (12, 21, 42, 68) and sensors (15) and configured to determine the number of users in each of the shared office spaces.

15. A method of determining a number of users in a space (11), the space (11) having an entrance (13) and an electronic lock (12, 21, 42, 68) provided outside of the space (11) and configured to selectively lock and unlock the entrance (13), comprising the steps of:
detecting unlocking of the entrance (13) by the electronic lock (12, 21, 42, 68);
detecting a user entering or exiting the space (11) through the entrance (13) and/or a door associated with the entrance (13) being opened or closed; and
determining the number of users in the space (11) by:
- increasing the number of users by one when the unlocking of the entrance (13) and the user entering or exiting the space (11) through the entrance (13) and/or the door associated with the entrance (13) being opened or closed are detected within a first predetermined period of time; and
- decreasing the number of users by one when the user entering or exiting the space (11) through the entrance (13) and/or the door associated with the entrance (13) being opened or closed is detected and the unlocking of the entrance (13) has not been detected within the first predetermined period of time prior to the detection of the user entering or exiting the space (11) through the entrance (13).
